# FASCICULE DE BREVET EUROPEEN

(11) **EP 0 902 877 B1**
(45) Date de publication et mention de la délivrance du brevet: **04.09.2002**
(21) Numéro de dépôt: 97926085.8
(22) Date de dépôt: 03.06.1997
(51) Int. Cl.: G01C 21/00

(54) **PROCEDE POUR L'EVITEMENT LATERAL PAR UN VEHICULE D'UNE ZONE MOBILE**
VERFAHREN ZUR SEITLICHEN VERMEIDUNG EINER BEWEGLICHEN ZONE EINES FAHRZEUGS
METHOD FOR THE LATERAL AVOIDANCE OF A MOBILE ZONE BY A VEHICLE

(30) Priorité: 07.06.1996 FR 9607075
(43) Date de publication de la demande: 24.03.1999
(73) Titulaire: THALES AVIONICS S.A., 78141 Vélizy Villacoublay Cédex (FR)
(72) Inventeur: DEKER, Guy, Thomson-CSF S.C.P.I., F-94117 Arcueil Cedex (FR)
(74) Mandataire: Guérin, Michel
(86) Numéro de dépôt international: FR9700969
(87) Numéro de publication internationale: WO97047945

(56) Documents cités:
- EP-A- 0 381 178
- EP-A- 0 565 399
- WO-A-95/19545
- WO-A-95/19547
- GB-A- 2 176 965
- PROCEEDINGS OF THE DIGITAL AVIONICS SYSTEMS CONFERENCE, LOS ANGELES, OCT. 14 - 17, 1991, no. CONF. 10, 14 Octobre 1991, INSTITUTE OF ELECTRICAL AND ELECTRONICS ENGINEERS, pages 420-425, XP000309279 STILES P ET AL: "ROUTE PLANNING"

## Description

La présente invention concerne un procédé pour déterminer une trajectoire d'évitement latéral par un véhicule d'une zone mobile qu'il n'est pas souhaitable de traverser.

Elle s'applique notamment, mais non exclusivement, au pilotage d'un aérodyne, pour aider le pilote à déterminer rapidement en vol, une trajectoire d'évitement, par exemple d'une zone météorologique dangereuse, telle qu'une formation orageuse.

En effet, le phénomène météorologique le plus caractéristique à éviter absolument pour un aérodyne est la formation orageuse résidant au sein d'un cumulo-nimbus où règnent des conditions sévères de turbulence et de givrage, et où les risques de foudroiement sont importants.
Pour éviter ce phénomène, la plupart des aérodynes équipés en instruments pour le pilotage sans visibilité disposent d'un radar météorologique qui fournit des informations météorologiques, ces informations donnant notamment les contours des zones météorologiques associés à un niveau de danger. Cependant, une fois détecté, c'est au pilote de gérer manuellement le problème météorologique soit en effectuant un évitement à vue de la zone, soit en traversant la zone.

Le document PROCEEDINGS OF THE DIGITAL AVIONICS SYSTEMS CONFERENCE, LOS ANGELES, OCT. 14 - 17, 1991, no. CONF. 10, 14 Octobre 1991, INSTITUTE OF ELECTRICAL AND ELECTRONICS ENGINEERS, pages 420-425, XP000309279 STILES P ET AL: 'ROUTE PLANNING' divulgue un procédé pour déterminer, en avance, une route de point A à point B en évitant, si possible considérant l'urgence et l'économique, des zones dangereuses. Un autre procédé est connu du document WO 95 19547 A. Dans ce document une route d'évitement, à partir d'une route initialement prévue, est déterminée si une menace est détectée dans cette route prévue.

La présente invention a pour but de soulager le pilote d'un véhicule dans le cas où un phénomène inattendu doit être évité par un contournement latéral de la zone où se produit le phénomène. A cet effet, elle propose un procédé pour l'évitement latéral par un véhicule d'au moins une zone mobile à partir d'une route initialement prévue et d'informations fournies périodiquement, donnant les contours de la zone mobile à éviter et la position courante et la vitesse du véhicule.

Selon l'invention, ce procédé est caractérisé en ce qu'il comprend successivement les étapes suivantes :
- la définition périodique de l'enveloppe de la zone à éviter à l'aide des dites informations de contour,
- la détermination d'un cercle circonscrit à l'enveloppe de la zone à éviter, et du vecteur vitesse du cercle circonscrit par enregistrement de positions successives de ce dernier,
- la détermination de la portion de la route prévue se situant sur le passage du cercle circonscrit, et le positionnement du cercle circonscrit au moment où le véhicule se trouve sur ladite portion de route,
- si une fois positionné, le cercle circonscrit est traversé par la route prévue du véhicule, le calcul de trajectoires d'évitement bâbord et tribord de la zone délimitée par le cercle circonscrit qui relient des points de sortie et de retour à la route initialement prévue, et
- la sélection d'une de ces deux trajectoires d'évitement en fonction de la longueur des nouvelles routes incluant respectivement les trajectoires d'évitement calculées, et du vecteur vitesse du centre du cercle circonscrit à la zone à éviter.

Grâce à ces dispositions, l'évitement d'une zone mobile peut être entièrement automatisé.

Selon une particularité de l'invention, les points de sortie et de retour à la route initialement prévue correspondent aux points d'intersection avec celle-ci de tangentes au cercle circonscrit à l'enveloppe de la zone à éviter, formant un angle prédéterminé avec la route initialement prévue, les trajectoires d'évitement bâbord et tribord étant définies par ces tangentes.

Avantageusement, le procédé selon l'invention s'applique également au cas de zones mobiles multiples. Dans ce cas, le procédé comprend en outre :
- la détermination d'un cercle circonscrit à l'enveloppe de chaque zone à éviter, et du vecteur vitesse respectif des cercles circonscrits ainsi déterminés, par enregistrement de positions successives de ces derniers,
- le positionnement de chaque zone par rapport à la route prévue du véhicule aux moments respectifs où le véhicule se situe sur les portions de route traversées par lesdites zones,
- la détermination de la première zone se trouvant sur la route prévue et une première sélection des zones à éviter se trouvant dans un secteur délimité par les tangentes au cercle circonscrit à la première zone à éviter et passant par la position courante du véhicule,
- une seconde sélection parmi les zones sélectionnées précédemment des zones situées à une distance inférieure à un seuil prédéterminé de la première zone ou d'une zone déjà sélectionnée lors de la seconde sélection,
- la détermination des points de sortie de la route initialement prévue en considérant la première zone, et des points de retour à la route prévue en considérant la dernière zone sélectionnée, et
- le calcul des trajectoires d'évitement bâbord et tribord composées de segments tangents aux cercles circonscrits à chaque zone précédemment sélectionnée, et des segments tangents passant par les points de sortie et de retour à la route prévue.

Un mode de réalisation du procédé selon l'invention sera décrit ci-après, à titre d'exemple non limitatif, avec référence aux dessins annexés dans lesquels :
La figure 1 représente schématiquement les équipements électroniques d'un aérodyne comprenant un calculateur destiné à mettre en oeuvre le procédé selon l'invention ;
La figure 2 illustre schématiquement l'algorithme exécuté pour traiter les signaux de détection de zones à éviter ;
Les figures 3 et 4 représentent schématiquement la trajectoire d'un aérodyne qui traverse une zone à éviter et les trajectoires possibles d'évitement ;
La figure 5 illustre le cas où deux zones successives à éviter se trouvent sur la trajectoire d'un aérodyne.

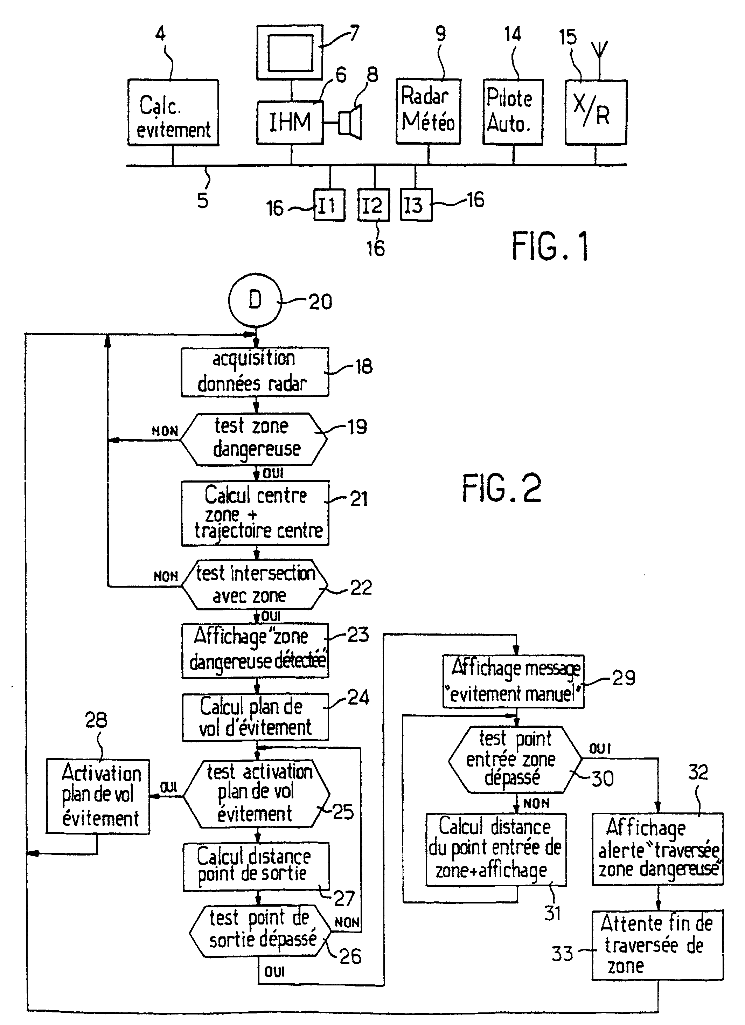

Tel que représenté sur la figure 1, le procédé selon l'invention est particulièrement conçu pour être exécuté par un calculateur 4 installé à bord d'un aérodyne, qui est couplé par l'intermédiaire d'un bus de transmission de données 5 appelé "bus avion", aux équipements de navigation incluant un dispositif de pilotage automatique 14 et des instruments de navigation 16, à un radar météorologique 9, ainsi qu'à un dispositif d'interface homme/machine 6 comprenant un élément de commande et des éléments de signalisation, tel qu'un écran de visualisation 7 et un haut-parleur 8 installés dans le cockpit.
D'une manière connue, le dispositif de pilotage automatique 14 comprend une mémoire dans laquelle est enregistrée la trajectoire prévue de l'aérodyne constituée d'une succession de segments de droite entre le point de départ et le point de destination.

Par ailleurs, le radar météorologique 9 est conçu pour déterminer la densité d'objets réfléchissant les ondes électromagnétiques émises par le radar, telles que les particules d'eau ou de glace et les précipitations. Un tel radar fourni périodiquement des informations permettant de reconstituer le contour de zones associées à un niveau de danger.

L'algorithme montré sur la figure 2 est exécuté par le calculateur 4 installé à bord de l'aérodyne. Il consiste tout d'abord à acquérir en permanence les données fournies périodiquement par le radar météorologique 9 (étape 18), et à tester le niveau de danger associé aux données reçues (étape 19). Cette analyse est effectuée principalement sur le même plan horizontal que l'avion (inclinaison nulle), mais aussi selon des angles légèrement positifs et négatifs (inclinaison de -5 degrés à +15 degrés), de manière à préciser l'ampleur et le caractère dangereux du phénomène.

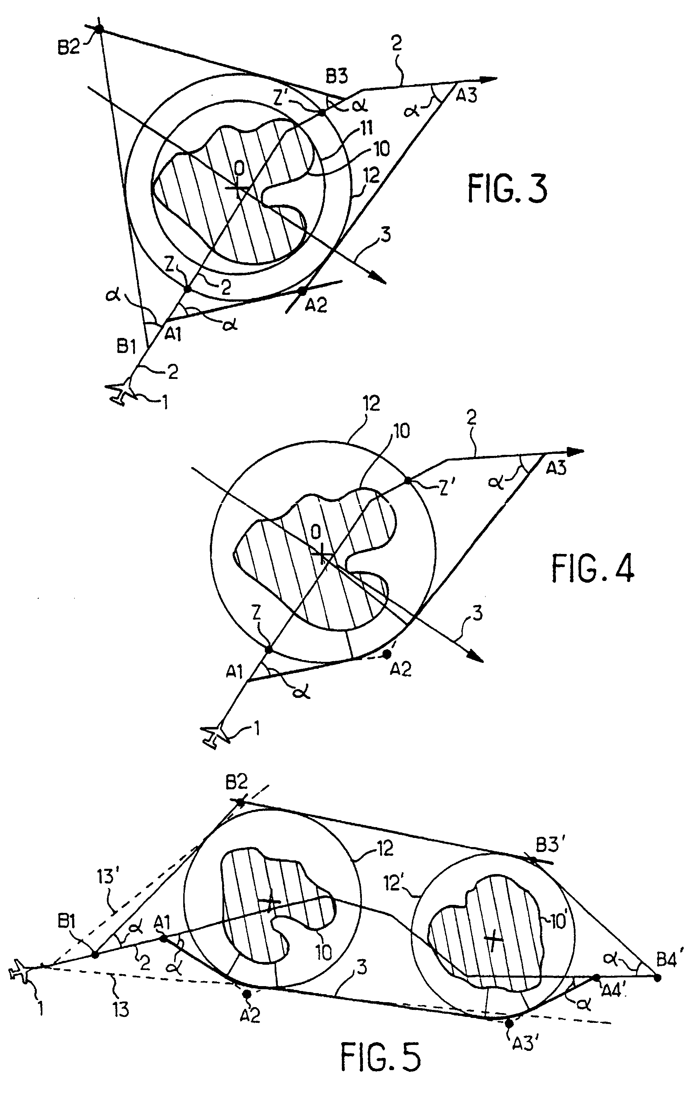

Lorsqu'une zone à éviter, c'est-à-dire, associée à un niveau de danger dépassant un certain seuil est détectée par le radar météorologique 9, cette zone correspondant par exemple à une zone orageuse constituée par un cumulo-nimbus, le calculateur 4 détermine à partir de ces données, à chaque fois qu'elles sont fournies par le radar 9, un cercle 11 dans lequel la zone orageuse 10 est circonscrite (voir figure 3). Ce cercle est par exemple déterminé par la position de son centre 0 et par son rayon. En première approximation, ces valeurs peuvent être déterminées en considérant les points du contour du niveau significatif de danger de la zone les plus éloignés les uns des autres. Pour une détermination plus précise de ces valeurs en vue d'optimiser la trajectoire d'évitement, le contour de la zone est tout d'abord modélisé par une succession de segments de droite, puis traité de manière à éliminer les points de concavité afin de modéliser la zone par une forme polygonale convexe. On détermine ensuite le centre de la zone par un calcul de barycentre, le rayon du cercle circonscrit correspondant à la distance entre le centre de la zone ainsi calculé et le point du contour de la zone le plus éloigné du centre.

La détermination périodique de ce cercle permet de calculer le vecteur vitesse représentatif du déplacement de la zone 10.
Bien entendu, ces résultats peuvent être consolidés par des informations météorologiques fournies par d'autres instruments de bord 16 ou par des équipements terrestres transmettant ces informations par radio qui sont reçues par un émetteur/récepteur 15 raccordé au bus avion 5.

Une fois que ces calculs ont été effectués à l'étape 21, le calculateur 4 va rechercher à l'étape 22, compte tenu du vecteur vitesse considéré constant en valeur et de la position courante de la zone à éviter 10, et de la route prévue 2, de la position courante et la vitesse de l'aérodyne 1, si celui-ci est susceptible de pénétrer dans la zone 10 modélisée par le cercle 11.

Si l'aérodyne ne va pas pénétrer dans la zone 10, on revient au début 20 de l'algorithme pour poursuivre l'analyse des informations fournies par le radar. Dans le cas contraire, le calculateur 4 envoie un message destiné à l'afficheur 7 pour avertir le pilote que la route 2 à parcourir par l'aérodyne 1 traverse une zone dangereuse qu'il vaut mieux éviter (étape 23). Il déclenche ensuite le calcul d'une trajectoire d'évitement (étape 24) qui consiste tout d'abord, comme représenté sur la figure 3, à positionner le cercle 11 par rapport à la route prévue 2 de l'aérodyne 1 au moment où celui-ci sera dans le passage du cercle 11, par exemple à l'intersection avec la trajectoire du point O.

Dans cette configuration, le calculateur 4 détermine un cercle de sécurité 12, concentrique au cercle 11, par ajout d'une marge de sécurité, par exemple de 5 milles nautiques, qui dépend de la taille et/ou du niveau de danger de la zone 10, ce cercle 12 constituant une limite à ne pas franchir par l'aérodyne 1. Puis, il détermine ensuite les points de sortie A1, B1, et de retour A3, B3 à la route 2 initialement prévue, en calculant les segments A1-A2, A2-A3, B1-B2, B2-B3 tangents au cercle de sécurité 12 et faisant un angle a avec la trajectoire initiale de 30 degrés ou 45 degrés (en fonction de la réglementation aérienne en vigueur dans la région où l'on se trouve), et permettant de contourner la zone 10 de part et d'autre du cercle 12.

Ces segments A1-A2, A2-A3 et B1-B2, B2-B3 déterminent respectivement une trajectoire d'évitement tribord A1-A2-A3 et une trajectoire d'évitement bâbord B1-B2-B3 de la zone 10, qui relient les points de sortie A1, B1 et de retour A3, B3 à la trajectoire 2 initialement prévue.

Les routes d'évitement sont obtenues en ajoutant aux trajectoires d'évitement les portions B1-A1, B3-A3 de la route prévue 2 de telle façon que les deux routes d'évitement B1-A1-A2-A3, B1-B2-B3-A3 aient les mêmes extrémités B1, A3.
Il s'agit ensuite de choisir l'une des deux routes d'évitement B1-A1-A2-A3 à B1-B2-B3-A3 ainsi calculées. Pour cela, le calculateur 4 détermine la longueur de chacune des deux nouvelles routes comprenant respectivement les deux trajectoires d'évitement calculées, pour sélectionner la plus courte, et si ces deux nouvelles routes sont d'égale longueur, on choisit celle qui se trouve au vent du phénomène.

Ainsi, comme illustré sur la figure 4, la route d'évitement choisie est celle qui passe par les points A1, A2 et A3.
Cette nouvelle route permet de modifier le plan de vol initial qui peut être affiché sur l'écran 7, avec demande de validation par le pilote. Ainsi, les points A1, A2 et A3 sont insérés dans le nouveau plan de vol, en tant que points de changement de cap, la portion de la route initiale située entre les points A1 et A3 étant supprimée.

A l'étape 25, le calculateur 4 se met en attente de la validation par le pilote du nouveau plan de vol incluant la trajectoire d'évitement A1-A2-A3 ainsi calculée, et ce jusqu'à ce que soit dépassé le point de sortie A1 de la route 2 initialement prévue 2 (étape 26). Pendant cette attente, le calculateur 4 calcule et affiche la valeur de la distance de ce point de sortie A1, compte tenu de la position courante de l'aérodyne 1, cette valeur étant rafraîchie périodiquement (étape 27).

Si pendant cette attente, le pilote a validé le nouveau plan de vol, celui-ci est envoyé au dispositif de pilotage automatique 14 en remplacement de celui 2 initialement prévu, qui devient alors actif (étape 28).

Avantageusement, la transition du segment A1-A2 vers le segment A2-A3 est une transition simple, c'est-à-dire selon un arc de cercle dépendant de la vitesse de l'aérodyne, qui permet de contourner la zone mobile 10, en suivant ses contours au plus près.

Si le pilote n'a pas validé le nouveau plan de vol avant le franchissement du point de sortie A1, le calculateur 4 envoie à l'étape 29 un message au pilote pour indiquer que ce point de sortie est dépassé. Ensuite, à l'étape 30, il calcule la distance entre la position courante de l'aérodyne 1 et le point Z d'entrée de la zone délimitée par le cercle 12. Tant que l'aérodyne 1 n'a pas atteint le point Z, cette distance est affichée avec rafraîchissement périodique (étape 31). Lorsque ce point Z est franchi, le calculateur 4 envoie un message d'alerte qui signale au pilote que l'on se trouve dans une zone dangereuse (étape 32). Le calculateur 4 se met ensuite en attente de la sortie de la zone dangereuse, compte tenu de la position du point de sortie Z' de cette zone, ainsi que de la position courante et de la vitesse de l'aérodyne 1 (étape 33), avant de revenir à l'étape 18 d'acquisition des données issues du radar météorologique 9.

Avantageusement, le calcul de la trajectoire d'évitement tient compte de la présence d'une autre ou d'autres zones dangereuses isolées par le radar.
Dans le cas où deux zones 10, 10' sont détectées, le calculateur 4 détermine les deux cercles de sécurité 12 et 12' entourant respectivement les deux zones 10, 10' (Figure 5).
Deux cas se présentent suivant que la seconde zone 10' (celle qui est la plus éloignée de l'aérodyne 1) est ou n'est pas située avec la première zone 10 dans un secteur délimité par les deux tangentes 13, 13' au cercle de sécurité 12 de la première zone 10 passant par la position courante de l'aérodyne 1.

Si le centre de la seconde zone 10' est en dehors de ce secteur, alors elle n'est pas à prendre en compte. Dans le cas contraire, il y a lieu de considérer si la seconde zone 10' est très éloignée ou non de la première 10, par exemple d'une distance correspondant à 5 fois le rayon du cercle 12 entourant la première zone 10.

Si la seconde zone 10' est très éloignée de la première 10, on effectuera alors deux évitements successifs, en considérant chaque zone 10, 10' isolément, et en commençant par l'évitement de la zone 10 la plus proche.

Dans le cas contraire, et si les deux zones 10, 10' traversent la trajectoire 2 de l'aérodyne 1 initialement prévue au même moment, alors la trajectoire d'évitement sera construite comme illustré sur la figure 5, en calculant comme précédemment, les segments de trajectoire A1-A2, B1-B2 de déviation par rapport à la trajectoire initiale 2, en considérant la première zone 10, et les segments A3'-A4' et B3'-B4" de retour à la trajectoire initiale 2, en considérant la seconde zone 10'.

Il s'agit ensuite de calculer les segments de trajectoire A2-A3' et B2-B3', les points A2 et B2 étant définis par l'intersection des tangentes au cercle 12 issue des points A1 et B1 avec les tangentes aux deux cercles 12 et 12', et les points A3' et B3' par l'intersection des tangentes aux deux cercles 12 et 12' avec les tangentes au cercle 12' passant par les points de retour A4' et B4'.

Comme précédemment, la trajectoire d'évitement qui sera finalement prise en compte est celle qui conduit à la nouvelle route la plus courte, et si les deux nouvelles routes ont une longueur identique, la nouvelle route sélectionnée sera celle qui est située au vent des zones à éviter 10, 10'.

## Revendications

1. Procédé pour l'évitement latéral par un véhicule (1) d'au moins une zone mobile (10) à partir d'une route initialement prévue (2) et d'informations fournies périodiquement, représentatives de la position des contours de la zone mobile à éviter (10) et la position courante et la vitesse du véhicule (1),
**caractérisé en ce qu'**il comprend successivement les étapes suivantes :
- la définition périodique (18) de l'enveloppe de la zone à éviter (10) à l'aide des dites informations de contour,
- la détermination (19) d'un cercle circonscrit (12) à l'enveloppe de la zone à éviter (10), et du vecteur vitesse (3) du cercle circonscrit (12) par enregistrement de positions successives de ce dernier,
- la détermination de la portion de la route (2) prévue se situant sur le passage du cercle circonscrit (12), et le positionnement de celui-ci au moment où le véhicule (1) se trouve sur ladite portion de route (2),
- si une fois positionné, le cercle circonscrit (12) est traversé par la route prévue (2) du véhicule (1), le calcul (24) de trajectoires d'évitement bâbord (B1-B2-B3) et tribord (A1-A2-A3) de la zone délimitée par le cercle circonscrit (12), qui relient des points de sortie (A1, B1) et de retour (A3, B3) à la route initialement prévue (2), et
- la sélection d'une de ces deux trajectoires d'évitement (A1-A2-A3, B1-B2-B3) en fonction de la longueur des nouvelles routes incluant respectivement les trajectoires d'évitement calculées, et de la direction de déplacement de la zone à éviter (10).

2. Procédé selon la revendication 1,
**caractérisé en ce que** les points de sortie (A1, B1) et de retour (A3, B3) à la route initialement prévue (2) correspondent aux points d'intersection avec celle-ci de tangentes (A1-A2, A2-A3, B1-B2, B2-B3) au cercle circonscrit (12) à l'enveloppe de la zone à éviter (10), formant un angle (α) prédéterminé avec la route initialement prévue (2), les trajectoires d'évitement bâbord (B1-B2-B3) et tribord (A1-A2-A3) étant définies par ces tangentes.

3. Procédé selon la revendication 1 ou 2,
**caractérisé en ce qu'**il comprend l'approximation du contour de la zone à éviter par un contour polygonal et l'élimination des points de concavité pour obtenir un contour polygonal convexe, le centre du cercle circonscrit étant déterminé par un calcul de barycentre appliqué au contour polygonal convexe, et son rayon par le calcul de la distance entre ledit centre et le point du contour polygonal le plus éloigné du centre.

4. Procédé selon l'une des revendications précédentes,
**caractérisé en ce que** lorsque plusieurs zones (10, 10') sont détectées, il comprend en outre :
- la détermination d'un cercle circonscrit (12, 12') à l'enveloppe de chaque zone à éviter (10, 10'), et du vecteur vitesse (3) respectif des cercles circonscrits ainsi déterminés, par enregistrement de positions successives de ces derniers,
- le positionnement de chaque zone (10, 10') par rapport à la route prévue (2) du véhicule (1) aux moments respectifs où le véhicule (1) se situe sur les portions de route (2) traversées par lesdites zones (10, 10'),
- la détermination de la première zone (10) se trouvant sur la route prévue (2) et une première sélection des zones (10') à éviter se trouvant dans un secteur délimité par les tangentes (13, 13') au cercle circonscrit (12) à la première zone à éviter (10) et passant par la position courante du véhicule (1),
- une seconde sélection parmi les zones (10, 10') sélectionnées précédemment des zones situées à une distance inférieure à un seuil prédéterminé de la première zone (10) ou d'une zone déjà sélectionnée lors de la seconde sélection,
- la détermination des points de sortie (A1, B1) de la route initialement prévue (2) en considérant la première zone (10), et des points de retour (A4', B4') à la route prévue (2) en considérant la zone (10') la plus éloignée sélectionnée lors de la seconde sélection, et
- le calcul des trajectoires d'évitement bâbord et tribord (A1-A2-A3'-A4', B1-B2-B3'-B4') composées de segments tangents (A2-A3', B2-B3') aux cercles circonscrits (12, 12') à chaque zone (10, 10') précédemment sélectionnée, et des segments tangents (A1-A2, B1-B2, A3'-A4', B3'-B4') passant par les points de sortie (A1, B1) et de retour (A4', B4') à la route prévue (2).

5. Procédé selon l'une des revendications précédentes,
**caractérisé en ce que** le rayon du cercle circonscrit (12, 12') à chaque zone à éviter (10, 10') est déterminé en appliquant une distance de sécurité avec la dite zone.

6. Procédé selon l'une des revendications précédentes,
**caractérisé en ce qu'**il comprend en outre l'acquisition en permanence d'informations représentatives des contours de zones (10, 10') associées à un niveau de danger, fournies par un radar météorologique (9), les zones à éviter étant détectées lorsque ce niveau de danger dépasse un certain seuil prédéterminé.

7. Procédé selon l'une des revendications précédentes,
**caractérisé en ce qu'**il comprend en outre la détermination d'une nouvelle route à partir de la définition de la trajectoire d'évitement sélectionnée (A1-A2-A3) et de la route initiale (2), cette nouvelle route étant exécutable par un dispositif de pilotage automatique (14).

8. Procédé selon l'une des revendications précédentes,
**caractérisé en ce qu'**il comprend en outre périodiquement le calcul et l'affichage (27) de la distance entre la position courante du véhicule (1) et le point de sortie (A1) de la route initiale (2) vers la trajectoire d'évitement sélectionnée (A1-A2-A3), l'activation (28) de la nouvelle route incluant la trajectoire d'évitement sélectionnée étant effectuée si cette nouvelle route a été validée.

9. Procédé selon la revendication 8,
**caractérisé en ce qu'**il comprend en outre périodiquement le calcul et l'affichage (31) de la distance entre la position courante du véhicule (1) et la zone à éviter (10), si le point de sortie (A1) est dépassé sans que la nouvelle route ait été validée, et l'affichage (32) d'un message d'alerte lorsque le véhicule (1) pénètre dans la zone à éviter (10).

10. Procédé selon l'une des revendications précédentes,
**caractérisé en ce que** la sélection de la trajectoire d'évitement bâbord (B1-B2-B3) ou tribord (A1-A2-A3) est effectuée en calculant la longueur de deux nouvelles routes (B1-A1-A2-A3, B1-B2-B3-A3) incluant respectivement ces deux trajectoires, et les portions (B1-A1, B3-A3) de la route initiale (2) de telle façon que les deux nouvelles routes aient les mêmes extrémités, la trajectoire sélectionnée (A1-A2-A3) étant celle qui conduit à la nouvelle route la plus courte, et si les longueurs des deux nouvelles routes sont identiques, la trajectoire sélectionnée est celle qui se trouve au vent de la zone à éviter (10).

## Patentansprüche

1. Verfahren zum seitlichen Vermeiden mindestens einer beweglichen Zone (10) mit einem Fahrzeug (1), ausgehend von einer ursprünglich vorgesehenen Route (2) und von periodisch gelieferten Informationen, die die Lage der Umrisse der zu vermeidenden beweglichen Zone (10) und die aktuelle Position und Geschwindigkeit des Fahrzeugs (1) enthalten, **dadurch gekennzeichnet, daß** das Verfahren nacheinander die folgenden Schritte enthält:
- die periodische Definition (18) der Hüllkurve der zu vermeidenden Zone (10) mithilfe der Informationen bezüglich der Umrisse,
- die Bestimmung (19) eines die Hüllkurve der zu vermeidenden Zone (10) umschreibenden Kreises (12) und des Geschwindigkeitsvektors (3) dieses Kreises (12) durch Aufzeichnung der aufeinanderfolgenden Positionen dieses Kreises,
- die Bestimmung des Abschnitts der vorgesehenen Route (2), der durch den Kreis (12) verläuft, und die Positionierung dieses Kreises in dem Zeitpunkt, in dem das Fahrzeug (1) sich auf diesem Abschnitt der Route (2) befinden würde,
- die Berechnung (24) von Umleitungsstrecken (B1-B2-B3) beziehungsweise (A1-A2-A3), um die durch den Kreis (12) begrenzte Zone rechts beziehungsweise links herum, die die Punkte des Verlassens (A1, B1) der beziehungsweise die Punkte der Rückkehr (A3, B3) zur ursprünglich vorgesehenen Route miteinander verbinden, wenn der umschriebene Kreis (12) nach seiner Positionierung vom Fahrzeug (1) auf der vorgesehenen Route (2) durchquert würde,
- und die Auswahl einer dieser Umleitungsstrecken (A1-A2-A3; B1-B2-B3) abhängig von der Länge dieser neuen Routen einschließlich der jeweils berechneten Umleitungsstrecke und von der Richtung der Bewegung der zu vermeidenden Zone (10).

2. Verfahren nach Anspruch 1, **dadurch gekennzeichnet, daß** die Punkte des Verlassens (A1, B1) der und die Punkte der Rückkehr (A3, B3) zur ursprünglich vorgesehenen Route (2) entsprechen den Schnittpunkten von Tangenten (A1-A2, A2-A3, B1-B2, B2-B3) an dem die zu vermeidende Zone (10) umschreibenden Kreis (12) mit der ursprünglich vorgesehenen Route, wobei die Route in diesen Punkten einen vorbestimmten Winkel (a) mit der ursprünglich vorgesehenen Route (2) einschließt und die Umleitungsstrecken links herum (B1-B2-B3) und rechts herum (A1-A2-A3) durch diese Tangenten definiert sind.

3. Verfahren nach Anspruch 1 oder 2, **dadurch gekennzeichnet, daß** sie eine Näherung des Umrisses der zu vermeidenden Zone durch einen polygonalen Umriß und eine Eliminierung der konkaven Punkte enthält, um einen konvexen polygonalen Umriß zu erhalten, wobei der Mittelpunkt des umschreibenden Kreises durch eine Berechnung des Schwerpunkts des konvexen polygonalen Umrisses bestimmt wird, während sein Radius durch die Berechnung des Abstands zwischen diesem Mittelpunkt und dem am weitesten vom Mittelpunkt entfernten Punkt des polygonalen Umrisses ermittelt wird.

4. Verfahren nach einem der vorstehenden Ansprüche, **dadurch gekennzeichnet, daß**, wenn mehrere Zonen (10, 10') erfaßt werden, das Verfahren außerdem darin besteht,
- der Hüllkurve jeder zu vermeidenden Zone (10, 10') einen Kreis (12, 12') zu umschreiben und den Geschwindigkeitsvektor (3) der so bestimmten umschriebenen Kreise durch Registrierung aufeinanderfolgender Stellungen dieser Kreise zu ermitteln,
- jede Zone (10, 10') bezüglich der vorgesehenen Route (2) des Fahrzeugs (1) in dem Zeitpunkt zu positionieren, in dem sich das Fahrzeug (1) auf den Abschnitten der Route (2) innerhalb dieser Zonen (10, 10') befinden würde,
- die erste Zone (10) zu bestimmen, die sich auf der vorgesehenen Route (2) befindet, und eine erste Auswahl der zu vermeidenden Zonen (10') durchzuführen, die sich in einem Sektor befinden, der durch die Tangenten (13, 13') an dem die erste zu vermeidende Zone (10) umschreibenden Kreis (12) begrenzt ist, welche durch die aktuelle Position des Fahrzeugs (1) verlaufen,
- eine zweite Auswahl von Zonen unter den vorher ausgewählten Zonen (10, 10') durchzuführen, die sich in einem geringeren Abstand als eine vorgegebene Schwelle von der ersten Zone (10) oder von einer bereits bei der zweiten Auswahl ausgewählten Zone befinden,
- die Punkte (A1, B1) des Verlassens der ursprünglich vorgesehenen Route unter Berücksichtigung der ersten Zone (10) und die Punkte (A4', B4') der Rückkehr zur vorgesehenen Route (2) unter Berücksichtigung der Zone (10') zu bestimmen, die bei der zweiten Auswahl als am weitesten entfernt ausgewählt worden ist,
- und Umleitungsstrecken rechts herum (A1-A2-A3'-A4') beziehungsweise links herum (B1-B2-B3'-B4') aufgrund von Segmenten (A2-A3', B2-B3'), die die jede vorher ausgewählte Zone (10, 10') umschreibenden Kreise (12, 12') tangieren, sowie aufgrund von tangierenden Segmenten (A1-A2, B1-B2, A3'-A4', B3'-B4') zu berechnen, die durch die Punkte (A1, B1) des Verlassens der beziehungsweise die Punkte (A4', B4') der Rückkehr zur vorgesehenen Route (2) verlaufen.

5. Verfahren nach einem der vorstehenden Ansprüche, **dadurch gekennzeichnet, daß** der Radius des jede zu vermeidende Zone (10, 10') umschreibenden Kreises (12, 12') unter Einrechnung eines Sicherheitsabstands von der Zone bestimmt wird.

6. Verfahren nach einem der vorstehenden Ansprüche, **dadurch gekennzeichnet, daß** außerdem permanent Informationen bezüglich der Umrisse der Zonen (10, 10') hinsichtlich eines Gefährdungsgrads erfaßt werden, die von einem Wetterradar (9) geliefert werden, wobei die zu vermeidenden Zonen erfaßt werden, wenn dieser Gefährdungsgrad eine gewisse vorbestimmte Schwelle überschreitet.

7. Verfahren nach einem der vorstehenden Ansprüche, **dadurch gekennzeichnet, daß** außerdem eine neue Route ausgehend von der Definition der ausgewählten Umleitungsstrecke (A1-A2-A3) und der ursprünglichen Route (2) bestimmt wird, die ein Autopilot (14) steuern kann.

8. Verfahren nach einem der vorstehenden Ansprüche, **dadurch gekennzeichnet, daß** außerdem periodisch der Abstand zwischen der aktuellen Position des Fahrzeugs (1) und dem Punkt (A1) des Verlassens der ursprünglichen Route (2) in Richtung auf die ausgewählte Umleitungsstrecke (A1-A2-A3) berechnet und angezeigt wird (27) und daß die neue Route mit der ausgewählten Umleitungsstrecke aktiviert wird (28), wenn diese neue Route bestätigt worden ist.

9. Verfahren nach Anspruch 8, **dadurch gekennzeichnet, daß** außerdem periodisch der Abstand zwischen der aktuellen Position des Fahrzeugs (1) und der zu vermeidenden Zone (10) berechnet und angezeigt wird (31), wenn der Punkt (A1) des Beginns der Umleitungsstrecke überschritten wurde, ohne daß die neue Route bestätigt wurde, und daß eine Warnmeldung angezeigt wird (32), wenn das Fahrzeug (1) in die zu vermeidende Zone (10) eindringt.

10. Verfahren nach einem der vorstehenden Ansprüche,
**dadurch gekennzeichnet, daß** die Wahl der Umleitungsstrecke links herum (B1-B2-B3) oder rechts herum (A1-A2-A3) durch Berechnung der Länge von zwei neuen Routen (B1-A1-A2-A3; B1-B2-B3-A3) bestehend aus diesen beiden Umleitungsstrecken und solchen Abschnitten (B1-A1; B3-A3) der ursprünglichen Route (2) berechnet wird, daß die beiden neuen Routen dieselben Endpunkte besitzen, wobei die ausgewählte Strecke (A1-A2-A3) diejenige ist, die die kürzere neue Route ergibt, und wobei im Fall identischer Länge der beiden Routen diejenige ausgewählt wird, die sich im Luv der zu vermeidenden Zone (10) befindet.

## Claims

1. Method for the lateral avoidance by a vehicle (1) of at least one mobile zone (10) from an initially planned route (2) and on the basis of information supplied periodically, representative of the position of the contours of the mobile zone to be avoided (10) and the current position and the speed of the vehicle (1),
**characterized in that** it comprises in succession the following steps:
- the periodic definition (18) of the envelope of the zone to be avoided (10) with the aid of the said contour information,
- the determination (19) of a circumscribed circle (12) about the envelope of the zone to be avoided (10), and of the speed vector (3) of the circumscribed circle (12) by recording successive positions of this circle,
- the determination of the portion of the planned route (2) lying on the locus of the circumscribed circle (12), and the positioning of the latter at the moment the vehicle (1) lies on the said portion of route (2),
- if having been positioned, the circumscribed circle (12) is crossed by the planned route (2) of the vehicle (1), the calculation (24) of port (B1-B2-B3) and starboard (A1-A2-A3) avoidance trajectories for the zone delimited by the circumscribed circle (12) which join points of exit (A1, B1) and of return (A3, B3) to the initially planned route (2), and
- the selection of one of these two avoidance trajectories (A1-A2-A3, B1-B2-B3) as a function of the length of the new routes which respectively include the calculated avoidance trajectories, and of the direction of movement of the zone to be avoided (10).

2. Method according to Claim 1,
**characterized in that** the points of exit (A1, B1) and of return (A3, B3) to the initially planned route (2) correspond to the points of intersection with the route of tangents (A1-A2, A2-A3, B1-B2, B2-B3) to the circumscribed circle (12) about the envelope of the zone to be avoided (10), forming a predetermined angle (a) with the initially planned route (2), the port (B1-B2-B3) and starboard (A1-A2-A3) avoidance trajectories being defined by these tangents.

3. Method according to Claim 1 or 2,
**characterized in that** it comprises the approximation of the contour of the zone to be avoided by a polygonal contour and the elimination of the points of concavity so as to obtain a convex polygonal contour, the centre of the circumscribed circle being determined by a barycentre calculation applied to the convex polygonal contour, and its radius by the calculation of the distance between the said centre and the point of the polygonal contour furthest from the centre.

4. Method according to one of the preceding claims,
**characterized in that** when several zones (10, 10') are detected, it furthermore comprises:
- the determination of a circumscribed circle (12, 12') about the envelope of each zone to be avoided (10, 10'), and of the respective speed vector (3) of the circumscribed circles thus determined, by recording successive positions of the circles,
- the positioning of each zone (10, 10') with respect to the planned route (2) of the vehicle (1) at the respective moments that the vehicle (1) lies on the portions of route (2) crossed by the said zones (10, 10'),
- the determination of the first zone (10) lying on the planned route (2) and a first selection of the zones (10') to be avoided lying in a sector delimited by the tangents (13, 13') to the circumscribed circle (12) about the first zone to be avoided (10) and passing through the current position of the vehicle (1),
- a second selection from among the zones (10, 10') selected previously of the zones situated a distance less than a predetermined threshold from the first zone (10) or a zone already selected during the second selection,
- the determination of the points of exit (A1, B1) of the initially planned route (2) by considering the first zone (10), and points of return (A4', B4') to the planned route (2) by considering the furthest zone (10') selected during the second selection, and
- the calculation of the port and starboard (A1-A2-A3'-A4', B1-B2-B3'-B4') avoidance trajectories composed of tangent segments (A2-A3', B2-B3') to the circumscribed circles (12, 12') about each previously selected zone (10, 10'), and of the tangent segments (A1-A2, B1-B2, A3'-A4', B3'-B4') passing through the points of exit (A1, B1) and of return (A4', B4') to the planned route (2).

5. Method according to one of the preceding claims,
**characterized in that** the radius of the circumscribed circle (12, 12') about each zone to be avoided (10, 10') is determined by applying a safety distance with the said zone.

6. Method according to one of the preceding claims,
**characterized in that** it furthermore comprises the continuous acquisition of information representative of the contours of zones (10, 10') associated with a danger level, supplied by a meteorological radar (9), the zones to be avoided being detected when this danger level exceeds a certain predetermined threshold.

7. Method according to one of the preceding claims,
**characterized in that** it furthermore comprises the determination of a new route from the definition of the selected avoidance trajectory (A1-A2-A3) and the initial route (2), this new route being executable by an automatic piloting device (14).

8. Method according to one of the preceding claims,
**characterized in that** it furthermore comprises periodically the calculation and the display (27) of the distance between the current position of the vehicle (1) and the point of exit (A1) from the initial route (2) to the selected avoidance trajectory (A1-A2-A3), activation (28) of the new route that includes the selected avoidance trajectory being performed if this new route has been validated.

9. Method according to 8,
**characterized in that** it furthermore comprises periodically the calculation and the display (31) of the distance between the current position of the vehicle (1) and the zone to be avoided (10), if the point of exit (A1) is passed without the new route having been validated, and the display (32) of an alert message when the vehicle (1) penetrates the zone to be avoided (10).

10. Method according to one of the preceding claims,
**characterized in that** the selection of the port (B1-B2-B3) or starboard (A1-A2-A3) avoidance trajectory is performed by calculating the length of two new routes (B1-A1-A2-A3, B1-B2-B3-A3) which respectively include these two trajectories, and the portions (B1-A1, B3-A3) of the initial route (2) in such a way that the two new routes have the same ends, the trajectory selected (A1-A2-A3) being that which leads to the shortest new route, and if the lengths of the two new routes are identical, the trajectory selected is that which lies windward of the zone to be avoided (10).
